# EUROPÄISCHE PATENTSCHRIFT

(11) **EP 1 711 993 B1**
(45) Veröffentlichungstag und Bekanntmachung des Hinweises auf die Patenterteilung: **28.01.2009**
(21) Anmeldenummer: 05716590.4
(22) Anmeldetag: 20.01.2005
(51) Int. Cl.: H02K 11/02

(54) **ENTSTÖRVORRICHTUNG**
INTERFERENCE SUPPRESSING DEVICE
DISPOSITIF DE SUPPRESSION D'INTERFERENCE

(30) Priorität: 23.01.2004 DE 102004003419
(43) Veröffentlichungstag der Anmeldung: 18.10.2006
(73) Patentinhaber: ROBERT BOSCH GMBH, 70442 Stuttgart (DE)
(72) Erfinder: SCHMIEDERER, Claus, 77688 Rheinau-Freistett (DE); KUECHEN, Tobias, 79312 Emmendingen (DE)
(86) Internationale Anmeldenummer: PCT/EP2005/050231
(87) Internationale Veröffentlichungsnummer: WO 2005/071821

(56) Entgegenhaltungen:
- WO-A-99/52210
- DE-A1- 2 813 110
- GB-A- 2 140 218
- US-A- 5 208 499
- US-B1- 6 400 058

## Beschreibung

Die Erfindung betrifft eine Entstörvorrichtung zum Absorbieren, Reflektieren oder Dämpfen der elektrischen oder elektromagnetischen Störemission einer Kommutiereinrichtung einer elektrischen Maschine gemäß dem Oberbegriff des Patentanspruchs 1.

### Stand der Technik

Elektrische Maschinen, deren Betrieb eine Kommutierung (Stromwendung) erfordert, zum Beispiel Gleichstrommotoren, weisen eine Kommutiereinrichtung auf. Zur Durchführung der Kommutierung sind sowohl elektrische Maßnahmen, beispielsweise unter Verwendung einer elektronischen Schaltung, als auch mechanische Maßnahmen bekannt. Zu den mechanischen Maßnahmen zählt die Verwendung eines Kommutators und leitenden Bürstenelementen, wobei der Kommutator einzelne Kommutatorlamellen auf weist. Üblicherweise ist es vorgesehen, dass die Bürstenelemente ortsfest derart relativ zum um eine Drehachse rotierenden Kommutator angeordnet sind, dass die Bürstenelemente während der Rotation des Kommutators die einzelnen Kommutatorlamellen in sequenzieller Reihenfolge' überstreichen. Durch den Kontakt des Bürstenelements mit einer Kommutatoriamelle wird eine elektrisch leitende Verbindung geschaffen, durch die der Betriebsstrom der Maschine fließt. Beim Übergang eines Bürstenelements von einer Kommutatorlamelle zur nächsten, entstehen Gasentladungen, die sehr steile Stromspitzen hervorrufen. Diese Stromspitzen führen wiederum zu hochfrequenten Störemissionen, die sich sowohl in elektrischen Impulsen entlang der stromführenden Elemente der Maschine als auch in elektromagnetischer Abstrahlung (Störstrahlung) manifestieren. Aus dem Stand der Technik ist es bekannt, die leitungsgebundenen elektrischen Störimpulse mittels eines Filters zu reduzieren. Zur Reduzierung der abgestrahlten Störemission sind aus dem Stand der Technik unter Anderem metallische Gehäuse bekannt. Zudem ist es aus der DE 101 29 884 A1 bekannt, eine Leiterplatte zu verwenden, die als Abschirmung die Störemission reduziert. Weiterhin ist es aus der WO 99/52210 A und der GB 2 140 218 A bekannt, eine Entstörvorrichtung gemäß dem Oberbegriff des Anspruchs 1 einzusetzen. Dennoch bleibt der Wunsch nach einer verbesserten Reduzierung der Störemission direkt an der Störquelle (hier die Kommutiereinrichtung) insbesondere deshalb weiterhin bestehen, da aus Kostengründen zunehmend Metall-Motorgehäuse durch Kunststoff-Motorgehäuse ersetzt werden und die Störemission, die vorher vom Metall-Motorgehäuse absorbiert wurde, nun das Kunststoff-Motorgehäuse ungehindert durchdringen kann.

### Vorteile der Erfindung

Die Entstörvorrichtung zum Absorbieren, Reflektieren oder Dämpfen der elektrischen oder elektromagnetischen Störemission einer Kommutiereinrichtung mit einem Kommutator und Bürstenelementen einer elektrischen Maschine weist eine Leiterplatte auf, wobei auf der der Kommutierungseinrichtung zugewandten Seite der Leiterplatte mindestens eine als Abschirmfläche ausgeführte Leiterfläche und auf der der Kommutierungseinrichtung abgewandten Seite der Leiterplatte ein die leitungsgebundene Störemission dämpfendes oder absorbierendes, elektrisches X2Y-Entstörfilter angeordnet ist. Erfindungsgemäß ist die Leiterfläche meanderförmig oder gitterförmig ausgeführt.

Die Abschirmfläche bewirkt, dass die elektromagnetische Störemission der Kommutiereinrichtung absorbiert, reflektiert oder gedämpft wird (nachfolgend einfach: abgeschirmt wird). Zudem ist es möglich, die Leiterfläche als zusätzliche Lage der Leiterplatte auszuführen oder aber funktional unbenutzte Flächen, also solche Bereiche, die die Funktionsbereiche der Leiterplatte - zum Beispiel Leiterbahnen, Messpunkte, Kontaktpunkte oder Bauteilanschlussstellen (pads) - umgeben, zu nutzen. Entscheidend für die Ausführung der Leiterfläche ist lediglich, dass die Leiterfläche eine abschirmende Wirkung entfaltet. Es sei dabei lediglich am Rande auf die Analogie zum Faradayschen Käfig hingewiesen, der auch in vielen Varianten ausgestaltet sein kann, um ein Eindringen eines Stroms/einer Spannung in den Innenraum des Käfigs zu verhindern.

Das auf der Leiterplatte angeordnete, die leitungsgebundene Störemission dämpfende oder absorbierende elektrische Entstörfilter, senkt in vorteilhafter Weise die Störemission weiter, da nun auch leitungsgebundene Störemissionen (auch solche die durch die Störstrahlung eingekoppelt werden) gedämpft oder gegebenenfalls absorbiert werden. Dabei wird als elektrisches Entstörfilter ein X2Y-Filter verwendet, das eine für den beschriebenen Einsatz vorteilhafte Charakteristik aufweist. Die Entstörvorrichtung ist zur Kommutiereinrichtung so positioniert, dass ein Bereich der Abschirmfläche zwischen dem Entstörfilter und der Kommutiereinrichtung liegt. Insbesondere wenn es sich bei der Abschirmfläche um eine Masselage der Leiterplatte handelt, kann durch eine direkte Anbindung des Entstörfilters an die Masselage eine hohe Wirksamkeit erzielt werden.

Eine vorteilhafte Ausgestaltung der Erfindung ergibt sich, wenn die Abschirmfläche mit einem Gleichspannungspotenzial elektrisch verbunden ist. Dadurch lässt sich die absorbierende oder dämpfende Wirkung der Abschirmfläche verbessern.

Vorteilhaft ist es, wenn die Abschirmfläche mit einem Massepotenzial elektrisch verbunden ist. Somit lässt sich auf konstruktiv sehr einfache Weise die Wirkung der Abschirmfläche verbessern.

Bei einer vorteilhaften Ausgestaltung der Erfindung weist die Leiterplatte einen die Störemission dämpfenden Lack auf. Dadurch lässt sich die abschirmende Wirkung weiter verbessern, insbesondere in solchen Bereichen der Leiterplatte, die nicht als Abschirmfläche ausgeführt sind.

Eine bevorzugte Ausgestaltung ergibt sich, wenn die Entstörvorrichtung eine die Kommutiereinrichtung umschließende, mantelförmige Schirmvorrichtung aufweist, deren eine Seitenöffnung von der Leiterplatte zumindest teilweise abgedeckt ist. Die Schirmvorrichtung besteht dabei aus einem Material, welches die elektromagnetische Strahlung abschirmt. Mittels einer solchen Entstörvorrichtung kann die elektromagnetische Störemission nahezu vollständig abgeschirmt werden. Zwar ergibt sich bereits bei einer teilweisen Abdeckung der Seitenöffnung eine deutlich verbesserte elektromagnetische Verträglichkeit (EMV), doch ist eine vollständige Abdeckung für eine optimale Abschirmung angezeigt.

Vorteilhafterweise ist die Abschirmfläche und/oder die Schirmvorrichtung aus einem Material gebildet, welches eine hohe Leitfähigkeit σ, insbesondere σ ungefähr gleich 1, und eine hohe Permeabilität µ, insbesondere µ deutlich größer als 1, aufweist. So können beispielsweise Kupfer-, Eisen- oder Stahllegierungen, insbesondere mit einem Nickelanteil, verwendet werden. Auch spezielle Kunststoffe zur Dämpfung von elektromagnetischer Strahlung können hier zum Einsatz kommen.

Ferner betrifft die Erfindung eine elektrische Maschine mit einer Entstörvorrichtung, die eines oder mehrere der zuvor genannten Merkmale aufweist.

### Zeichnungen

Die Erfindung wird nachfolgend anhand von Ausführungsbeispielen näher erläutert. Dabei zeigt die
- Figur 1: ein Beispiel einer Entstörvorrichtung,
- Figur 2: ein Ausführungsbeispiel einer erfindungsgemäßen Entstör- vorrichtung mit einer Schirmvorrichtung,
- Figur 3: ein Ausführungsbeispiel einer meanderförmigen Leiterfläche der Entstörvorrichtung, und
- Figur 4: ein Ausführungsbeispiel einer gitterförmigen Leiterfläche der Entstörvorrichtung.

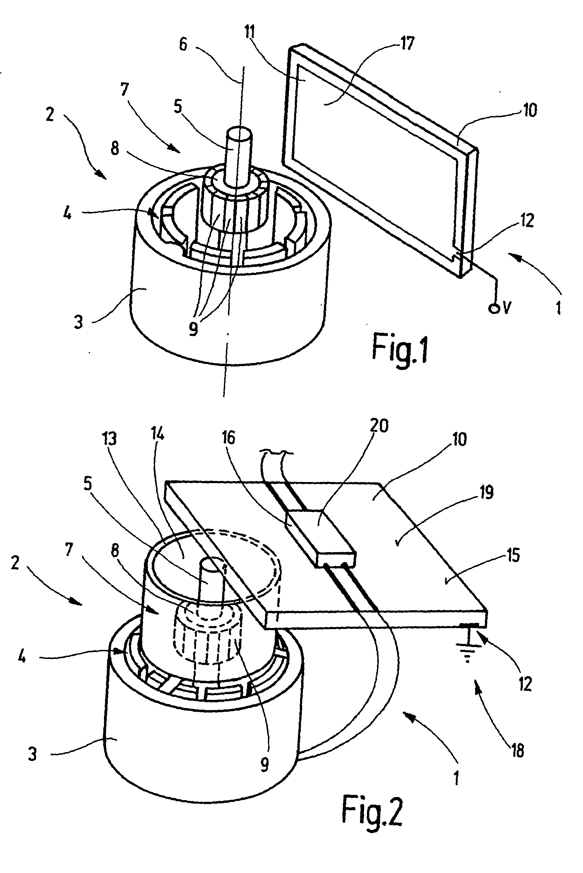

Die Figur 1 zeigt eine Entstörvorrichtung 1 und - stark vereinfacht - eine elektrische Maschine 2, die hier als Gleichstrommotor ausgebildet ist. Da die Funktion der elektrischen Maschine 2 dem Fachmann gut bekannt ist, soll darauf hier nicht näher eingegangen werden. Daher sind von der elektrischen Maschine 2 lediglich der Stator 3, der Rotorkern 4, die Rotorwelle 5 mit ihrer Drehachse 6 sowie die Kommutiereinrichtung 7 gezeigt. Die Kommutiereinrichtung 7 weist einen Kommutator 8 und Bürstenelemente auf, wobei die prinzipielle Anordnung der Bürstenelemente dem Fachmann wohl bekannt ist und die Bürstenelemente der Übersichtlichkeit halber nicht eingezeichnet sind. Der Kommutator 8 weist eine Vielzahl von Kommutatorlamellen 9 auf, die wie gezeigt entlang des Umfangs des Kommutators 8 angeordnet sind, wobei zwei jeweils nebeneinander liegende Kommutatorlamellen 9 von einander elektrisch isoliert sind. Beim Betrieb der elektrischen Maschine 2 dreht sich die Rotorwelle 5 und der mit ihr fest verbundene Kommutator 8, so dass die ortsfest zum Stator angeordneten Bürstenelemente nacheinander über die einzelnen Kommutatorlamellen 9 streichen. Beim Wechsel eines Bürstenelements von einer Kommutatorlamelle 9 zur nächsten entsteht eine Störemission, die auch als Bürstenfeuer bezeichnet wird. Die Störstrahlung der Kommutiereinrichtung 7 trifft auf die Entstörvorrichtung 1, die eine Leiterplatte 10 aufweist. Die Leiterplatte 10 trägt auf ihrer der Kommutiereinrichtung 7 zugewandten Seite eine Leiterfläche 11, die als Abschirmfläche 17 ausgebildet ist. In diesem Beispiel wurde die Leiterfläche 11 als durchgehend geschlossene Abschirmfläche 17 ausgebildet. Als Teil der Leiterfläche 11 ist ein Anschlussbereich 12 ausgebildet, mittels dessen die Abschirmfläche 17 mit einem Gleichspannungspotenzial V elektrisch verbunden ist. Selbstverständlich können auch anders ausgebildete Anschlussmöglichkeiten gewählt werden. Bei der Leiterplatte 10 kann es sich um eine ohnehin zur Steuerung/Regelung der elektrischen Maschine 2 vorhandene Leiterplatte 10 handeln. Ebenso ist es möglich eine bereits vorhandene Leiterplatte 10 mit einer genannten Abschirmfläche 17 zu versehen oder eine eigenständige Leiterplatte 10 zu Abschirmzwecken zu verwenden.

Die Figur 2 zeigt ein Ausführungsbeispiel einer erfindungsgemäßen Entstörvorrichtung 1, bei der die Kommutiereinrichtung 7 von einer Schirmvorrichtung 13 umschlossen ist, die hier zylindermantelförmig ausgebildet ist. Die Schirmvorrichtung 13 bildet eine Seitenöffnung 14, die von der Leiterplatte 10 teilweise abgedeckt wird. Die Leiterplatte 10 ist mit einem die Störemission dämpfenden Lack 19 beschichtet. Auf der von der Kommutiereinrichtung 7 abgewandten Seite 15 der Leiterplatte 10 ist ein elektrisches Entstörfilter 16, hier ein Keramik-Entstörfilter, insbesondere ein X2Y-Filter 20, angeordnet. Das Entstörfilter 16 ist wie gezeigt in Serie mit den Stromleitungen der elektrischen Maschine 2 geschaltet, um die leitungsgebundenen Störemissionen zu dämpfen oder zu absorbieren. Die in dieser Ansicht verdeckte Leiterfläche 11 ist über den Anschlussbereich 12 an ein Massepotenzial 18 angeschlossen. Die hier gezeigte Entstörvorrichtung 1 bietet eine sehr gute Abschirmung sowohl von gestrahlter als auch von leitungsgebundener Störemission.

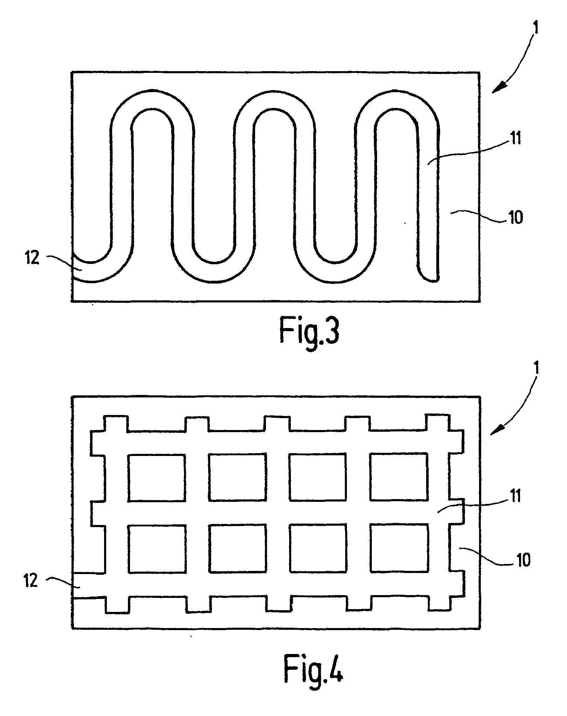

Figur 3 und Figur 4 zeigen jeweils eine - nicht maßstabsgerechte - mögliche Ausführung der Leiterfläche 11 auf der Leiterplatte 10 der Entstörvorrichtung 1. In der Figur 3 ist die Leiterfläche 11 meanderförmig und in der Figur 4 gitterförmig ausgeführt.

Durch den Einsatz der erfindungsgemäßen Vorrichtung in einem elektrischen Universalmotor kann ein Motor, insbesondere ein Gleichstrommotor realisiert werden, bei dem die elektromagnetischen Störungen wesentlich vermindert werden können. Des Weiteren kann dadurch erreicht werden, dass SMD (Surface Mounted Device) Single-Chips eingesetzt werden können. Dem derzeitigen Entwicklungstrend im Hinblick auf die Verwendung von Kunststoffgehäusen kann dadurch Rechnung getragen werden, was eine günstigere Herstellung ermöglicht.

Des Weiteren kann ein Kosteneinsparungspotenzial dadurch bewirkt werden, indem der Filteraufwand minimiert wird, wobei durch den verminderten Bauteileaufwand auch die Haltbarkeit und Zuverlässigkeit der Kommutiereinrichtung erhöht werden können. Ein optimales Design der Filterstruktur ist gewährleistet. Durch die Reduzierung der Bauteile und die Möglichkeit Kunststoffgehäuse verwenden zu können, kann auch eine relativ große Reduzierung des Gewichts der Kommutiereinrichtung erreicht werden. Darüber hinaus können mit der erfindungsgemäßen Entstörvorrichtung auch die gesetzlich geforderten Entstörgrade in den abgestrahlten Frequenzbereichen eingehalten werden.

Ein weiterer Vorteil kann darin gesehen werden, dass der Design-Freiheitsgrad bei der Motorgehäuse-Konstruktion und der Systemauslegung erhöht wird. Besonders in unmittelbarer Nähe der Störungsquelle kann durch die erfindungsgemäße Entstörvorrichtung eine erhebliche Reduktion der abgestrahlten Felder und der leitungsgebundenen Störung erzielt werden.

## Patentansprüche

1. Entstörvorrichtung (1) zum Absorbieren, Reflektieren oder Dämpfen der elektrischen oder elektromagnetischen Störemission einer Kommutiereinrichtung (7) mit einem Kommutator (8) und Bürstenelementen einer elektrischen Maschine (2), aufweisend eine Leiterplatte (10), wobei auf der der Kommutierungseinrichtung (7) zugewandten Seite der Leiterplatte (10) mindestens eine als Abschirmfläche (17) ausgeführte Leiterfläche (11) und auf der der Kommutierungseinrichtung (7) abgewandten Seite (15) der Leiterplatte (10) ein die leitungsgebundene Störemission dämpfendes oder absorbierendes, elektrisches X2Y- Entstörfilter (16, 20), angeordnet ist, **dadurch gekennzeichnet, dass** die Leiterfläche (11) meanderförmig oder gitterförmig ausgeführt ist.

2. Entstörvorrichtung (1) nach einem der vorhergehenden Ansprüche, **dadurch gekennzeichnet, dass** die Abschirmfläche (17) mit einem Gleichspannungspotenzial (V) elektrisch verbunden ist.

3. Entstörvorrichtung (1) nach einem der vorhergehenden Ansprüche, **dadurch gekennzeichnet, dass** die Abschirmfläche (17) mit einem Massepotenzial (18) elektrisch verbunden ist.

4. Entstörvorrichtung (1) nach einem der vorhergehenden Ansprüche, **dadurch gekennzeichnet, dass** die Leiterplatte (10) einen die Störemission dämpfenden Lack (19) aufweist.

5. Entstörvorrichtung (1) nach einem der vorhergehenden Ansprüche, **dadurch gekennzeichnet, dass** die Entstörvorrichtung (1) eine die Kommutiereinrichtung (7) umschließende, mantelförmige Schirmvorrichtung (13) aufweist, deren eine Seitenöffnung (14) von der Leiterplatte (10) zumindest teilweise abgedeckt ist.

6. Entstörvorrichtung (1) nach einem der vorhergehenden Ansprüche, **dadurch gekennzeichnet, dass** die Abschirmfläche (17) und/oder die Schirmvorrichtung (13) aus einem Material mit hoher Leitfähigkeit σ, insbesondere σ ungefähr gleich 1, und mit hoher Permeabilität µ, insbesondere µ deutlich größer als 1, gebildet sind.

7. Elektrische Maschine (2), **gekennzeichnet durch** eine Entstörvorrichtüng (1) nach einem der vorhergehenden Ansprüche.

## Claims

1. Interference-suppression apparatus (1) for absorbing, reflecting or damping the electrical or electromagnetic interference emission of a commutation device (7) comprising a commutator (8) and brush elements of an electrical machine (2), having a printed circuit board (10), with at least one conductor area (11) which is designed as a screening area (17) being arranged on that face of the printed circuit board (10) which is directed towards the commutation device (7), and a electrical X2Y interference-suppression filter (16, 20) which damps or absorbs the line-bound interference emission being arranged on that face (15) of the printed circuit board (10) which is directed away from the commutation device (7), **characterized in that** the conductor area (11) is of meandering or lattice-like design.

2. Interference-suppression apparatus (1) according to Claim 1, **characterized in that** the screening area (17) is electrically connected to a DC voltage potential (V).

3. Interference-suppression apparatus (1) according to either of the preceding claims, **characterized in that** the screening area (17) is electrically connected to earth potential (18).

4. Interference-suppression apparatus (1) according to one of the preceding claims, **characterized in that** the printed circuit board (10) has a coating (19) which damps the interference emission.

5. Interference-suppression apparatus (1) according to one of the preceding claims, **characterized in that** the interference-suppression apparatus (1) has a jacket-like screening apparatus (13) which surrounds the commutation device (7) and whose one side opening (14) is at least partially covered by the printed circuit board (10).

6. Interference-suppression apparatus (1) according to one of the preceding claims, **characterized in that** the screening area (17) and/or the screening apparatus (13) are formed from a material having a high conductivity s, in particular s of approximately 1, and having high permeability µ, in particular µ of considerably greater than 1.

7. Electrical machine (2), **characterized by** an interference-suppression apparatus (1) according to one of the preceding claims.

## Revendications

1. Dispositif d'antiparasitage (1) pour absorber, réfléchir ou atténuer les émissions parasites électriques ou électromagnétiques d'un dispositif de commutation (7) comprenant un commutateur (8) et des éléments à balais d'une machine électrique (2), présentant un circuit imprimé (10), au moins une surface conductrice (11) réalisée sous la forme d'une surface de blindage (17) étant disposée sur le côté du circuit imprimé (10) qui fait face au dispositif de commutation (7) et un filtre d'antiparasitage électrique X2Y (16, 20) qui atténue ou absorbe les émissions parasites étant disposé sur le côté (15) du circuit imprimé (10) à l'opposé du dispositif de commutation (7), **caractérisé en ce que** la surface conductrice (11) est réalisée en forme de méandre ou en forme de grille.

2. Dispositif d'antiparasitage (1) selon la revendication 1, **caractérisé en ce que** la surface de blindage (17) est reliée électriquement avec un potentiel de tension continue (V).

3. Dispositif d'antiparasitage (1) selon l'une des revendications précédentes, **caractérisé en ce que** la surface de blindage (17) est reliée électriquement avec un potentiel de masse (18).

4. Dispositif d'antiparasitage (1) selon l'une des revendications précédentes, **caractérisé en ce que** le circuit imprimé (10) présente un vernis (19) qui atténue les émissions parasites.

5. Dispositif d'antiparasitage (1) selon l'une des revendications précédentes, **caractérisé en ce que** le dispositif d'antiparasitage (1) présente un dispositif de blindage (13) en forme d'enveloppe qui entoure le dispositif de commutation (7) et dont une ouverture latérale (14) est au moins partiellement recouverte par le circuit imprimé (10).

6. Dispositif d'antiparasitage (1) selon l'une des revendications précédentes, **caractérisé en ce que** la surface de blindage (17) et/ou le dispositif de blindage (13) est constitué d'un matériau à conductivité σ élevée, notamment avec σ approximativement égale à 1, et à perméabilité µ élevée, notamment avec µ nettement supérieure à 1.

7. Machine électrique (2), **caractérisée par** un dispositif d'antiparasitage (1) selon l'une des revendications précédentes.
